# EUROPEAN PATENT SPECIFICATION

(11) **EP 3 438 062 B1**
(45) Date of publication and mention of the grant of the patent: **01.07.2020**
(21) Application number: 17773800.2
(22) Date of filing: 16.02.2017
(51) Int. Cl.: E06B 3/677, C03C 27/06

(54) **GLASS PANEL UNIT MANUFACTURING METHOD**
GLASSCHEIBENEINHEITHERSTELLUNGSVERFAHREN
PROCÉDÉ DE FABRICATION D'UNE UNITÉ PANNEAU EN VERRE

(30) Priority: 31.03.2016 JP 2016072495
(43) Date of publication of application: 06.02.2019
(73) Proprietor: Panasonic Intellectual Property Management Co., Ltd., Osaka-shi, Osaka 540-6207 (JP)
(72) Inventor: ABE, Hiroyuki, Osaka 540-6207 (JP); URIU, Eiichi, Osaka 540-6207 (JP); ISHIBASHI, Tasuku, Osaka 540-6207 (JP); HASEGAWA, Kenji, Osaka 540-6207 (JP)
(74) Representative: Müller-Boré & Partner Patentanwälte PartG mbB
(86) International application number: PCT/JP2017/005773
(87) International publication number: WO 2017/169252

(56) References cited:
- WO-A1-2012/068903
- WO-A1-2013/004038
- WO-A1-2013/172033
- WO-A1-2016/017709
- JP-A- 2004 185 962
- JP-A- 2015 147 728
- JP-A- 2016 030 718
- US-A- 6 128 066

## Description

### Technical Field

The present invention relates to a manufacturing method of a glass panel unit.

### Background Art

Patent Literature 1 discloses a glass panel unit. The glass panel unit disclosed in Patent Literature 1 includes a first glass panel and a second glass panel disposed to face the first glass panel with a prescribed space formed between the first glass panel and the second glass panel. The glass panel unit further includes a seal and an inside space. The seal is disposed between the first glass panel and the second glass panel to hermetically bond the first glass panel and the second glass panel to each other. The inside space is enclosed by the first glass panel, the second glass panel, and the seal.

In a manufacturing process of the glass panel unit, a preassembled component including a first glass panel, a second glass panel, a frame member disposed between the first glass panel and the second glass panel to hermetically bond the first glass panel to the second glass panel, and an exhaust port communicating with an outside space and the inside space enclosed by the first glass panel, the second glass panel, and the frame member is placed in a sealing evacuation furnace to achieve a vacuum state of the inside space, and the frame member is heated to seal the exhaust port. The glass panel unit as a finished product is thus obtained.

In the glass panel unit described in Patent Literature 1, the preassembled component has to be inserted in the sealing evacuation furnace, which is a special large-scale device, to achieve the vacuum state and to seal the exhaust port. Thus, a simple manufacturing method is in demand.

### Citation List

### Patent Literature

Patent Literature 1: WO 2013/172033

WO 2013/004038 A1 describes a method of a glass panel unit wherein a pre-assembled component is housed in a chamber having an air passage for evacuation. Said chamber is provided with a pressing part, being a pressing plate, which is movable to press the two glass panels onto each other so that they approach each other. A heater is provided outside the chamber to deform the frame member so as to close the exhaust port after evacuation of the inner space of the glass panel unit.

### Summary of Invention

It is an object of the present invention to obtain a manufacturing method of a glass panel unit, the manufacturing method enabling a glass panel unit to be simply manufactured.

A manufacturing method of a glass panel unit according to the present invention is defined by the appended claims.

### Brief Description of Drawings

FIG. 1 is a sectional view schematically illustrating a finished product as a glass panel unit in a manufacturing method of a glass panel unit according to a first embodiment of the present invention;
FIG. 2 is a plan view schematically illustrating the finished product;
FIG. 3 is a sectional view schematically illustrating a preassembled component of the glass panel unit;
FIG. 4 is a plan view schematically illustrating the preassembled component;
FIG. 5 is a perspective view illustrating a preassembled component after a fourth step in the manufacturing method ends;
FIG. 6 is a perspective view illustrating the preassembled component in a fifth step in the manufacturing method;
FIG. 7 is a temperature time chart illustrating a first melting step, an evacuation step, and a second melting step included in the manufacturing method;
FIG. 8 is a perspective view illustrating the preassembled component after an assembling process in the manufacturing method ends;
FIG. 9 is a sectional view illustrating a chamber device in the manufacturing method;
FIG. 10 is a sectional view illustrating a chamber device in a manufacturing method of a glass panel unit according to an example not falling within the scope of the claims;
FIG. 11 is a sectional view illustrating a chamber device in a manufacturing method of a glass panel unit according to another embodiment;
FIG. 12 is a sectional view schematically illustrating a variation of the glass panel unit; and
FIG. 13 is a partially cutaway plan view schematically illustrating the variation.

### Description of Embodiments

The embodiments described below relate to manufacturing methods of a glass panel unit and in particular, to a glass panel unit including a first glass panel, a second glass panel disposed to face the first glass panel with a prescribed space formed between the second glass panel and the first glass panel, and a seal disposed between the first glass panel and the second glass panel to hermetically bond the first glass panel to the second glass panel and a manufacturing method of the glass panel unit.

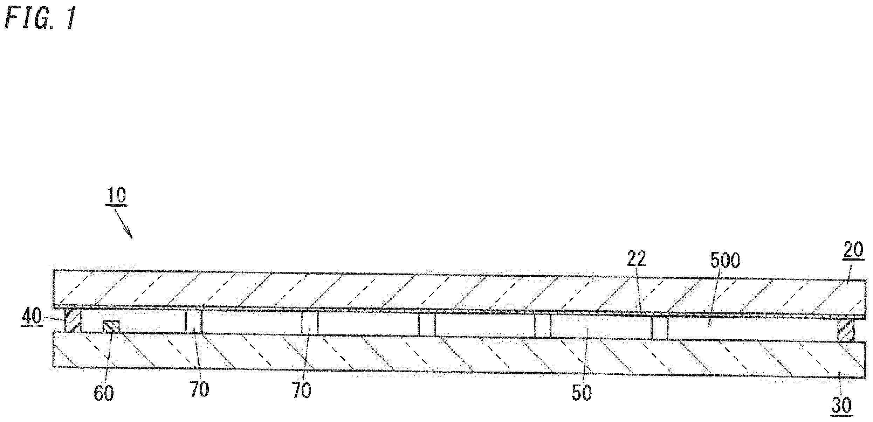

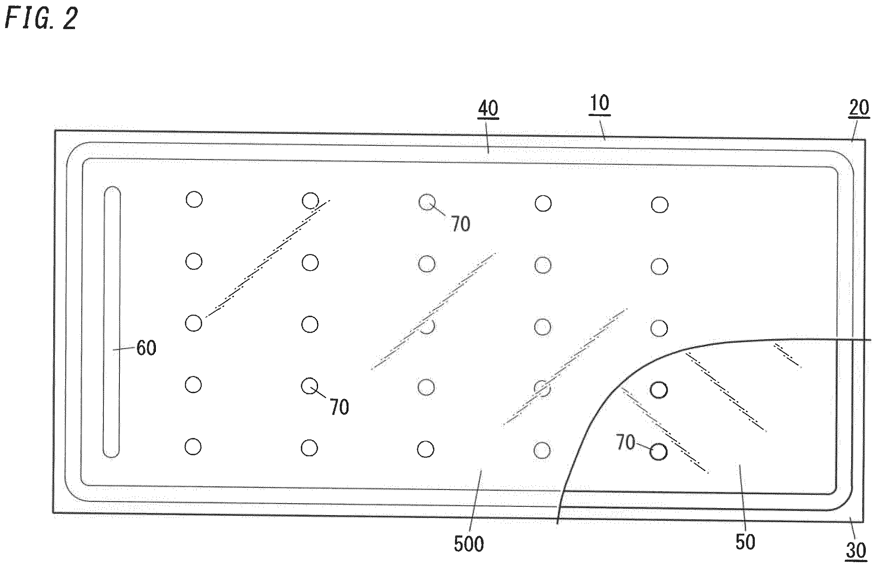

FIGS. 1 and 2 show a glass panel unit (a finished product as a glass panel unit) 10 of the first embodiment. The glass panel unit 10 of the first embodiment is a vacuum insulated glass unit. The vacuum insulated glass unit is a type of multiple panes including at least a pair of glass panels.

The glass panel unit 10 of the first embodiment includes a first glass panel 20, a second glass panel 30, a seal 40, a reduced pressure space 50, a gas adsorbent 60, and a plurality of spacers 70.

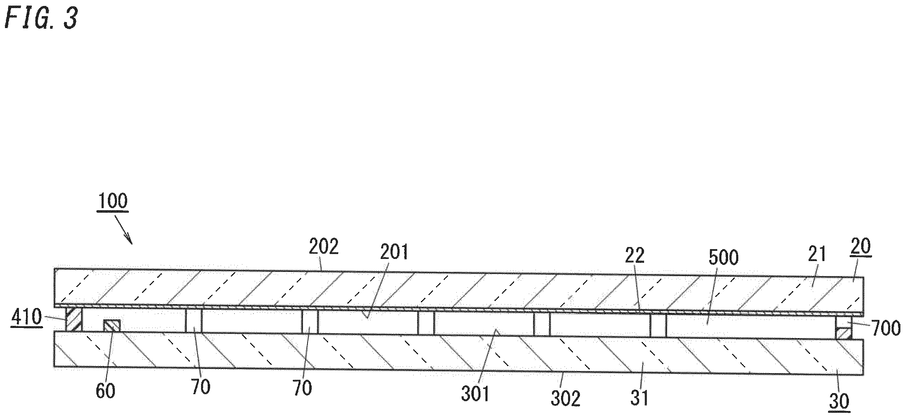

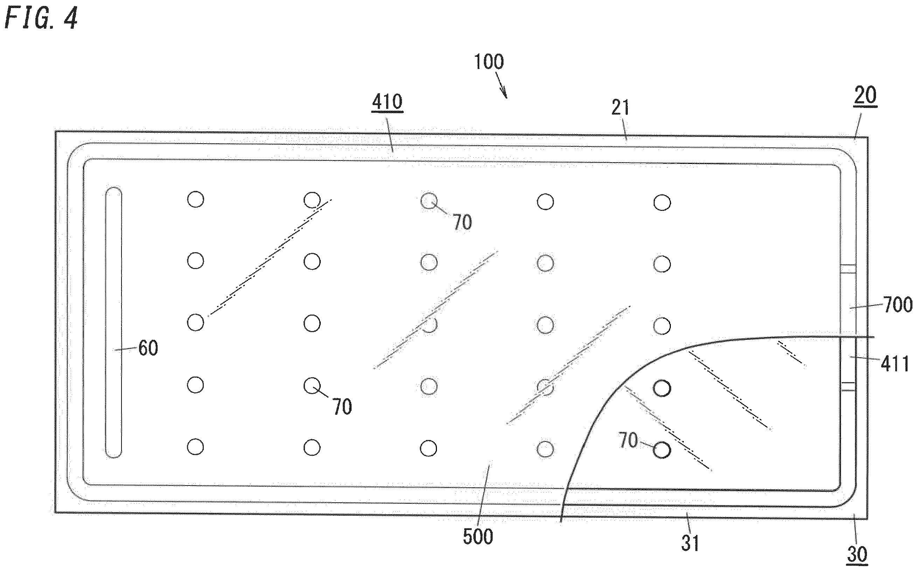

The glass panel unit (finished product) 10 is obtained by performing prescribed processes on a preassembled component 100 shown in FIGS. 3 and 4.

The preassembled component 100 includes the first glass panel 20, the second glass panel 30, a frame member 410, an inside space 500, the gas adsorbent 60, and the plurality of spacers 70.

The first glass panel 20 includes a glass plate 21 which defines a planar shape of the first glass panel 20 and a coating 22.

The glass plate 21 is a rectangular flat plate having one surface (a lower surface in FIG. 3) and the other surface (an upper surface in FIG. 3) parallel to each other in a thickness direction of the glass plate 21. The one surface and the other surface of the glass plate 21 are both flat surfaces. Examples of a material of the glass plate 21 include soda-lime glass, high strain-point glass, chemically strengthened glass, no-alkali glass, quartz glass, Neoceram, and physically strengthened glass.

The coating 22 is formed on the one surface of the glass plate 21. The coating 22 is an infrared reflective film. Note that the coating 22 is not limited to the infrared reflective film but may be a film having a desired physical property.

The coating 22 has a surface facing the second glass panel 30 and serving as a first surface 201 of the first glass panel 20, and the other surface of the glass plate 21 serves as a second surface 202 of the first glass panel 20.

The second glass panel 30 includes a glass plate 31 which defines a planar shape of the second glass panel 30. The glass plate 31 is a rectangular flat plate and has one surface (an upper surface in FIG. 3) and the other surface (a lower surface in FIG. 3) parallel to each other in a thickness direction of the glass plate 31. The one surface and the other surface of the glass plate 31 are both flat surfaces.

The one surface of the glass plate 31 serves as a first surface 301 of the second glass panel 30, and the other surface of the glass plate 31 serves as a second surface 302 of the second glass panel 30.

The planar shape and the planar size of the glass plate 31 are the same as those of the glass plate 21. Moreover, the glass plate 31 has the same thickness as the glass plate 21. Examples of a material of the glass plate 31 include soda-lime glass, high strain-point glass, chemically strengthened glass, no-alkali glass, quartz glass, Neoceram, and physically strengthened glass.

The second glass panel 30 includes only the glass plate 31. The second glass panel 30 is disposed to face the first glass panel 20. Specifically, the first glass panel 20 and the second glass panel 30 are disposed such that the first surface 201 of the first glass panel 20 and the first surface 301 of the second glass panel 30 are parallel to each other and face each other.

The frame member 410 is disposed between the first glass panel 20 and the second glass panel 30 to hermetically bond the first glass panel 20 to the second glass panel 30. Thus, the inside space 500 enclosed by the frame member 410, the first glass panel 20 and the second glass panel 30 is formed.

The frame member 410 includes a thermal adhesive. The thermal adhesive is, for example, glass frit. The glass frit is, for example, low-melting-point glass frit. The low-melting-point glass frit is, for example, bismuth-based glass frit, lead-based glass frit, or vanadium-based glass frit.

The frame member 410 has a rectangular frame shape. The planar shape of the frame member 410 is the same as that of each of the glass plates 21 and 31, but the planar size of the frame member 410 is smaller than that of each of the glass plates 21 and 31. The frame member 410 is formed along an outer periphery of the second glass panel 30.

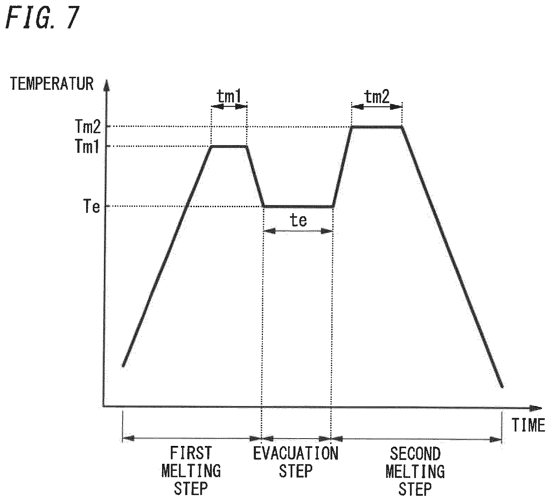

The first glass panel 20 and the second glass panel 30 are hermetically bonded to each other by the frame member 410 by melting the thermal adhesive serving as the frame member 410 once at a prescribed temperature (first melting temperature) Tm1 (see FIG. 7) higher than or equal to the softening point of the thermal adhesive.

The frame member 410 has an exhaust port 700. The exhaust port 700 is a pore communicating with the inside space 500 and an outside space. The exhaust port 700 is used to evacuate the inside space 500.

The gas adsorbent 60 is disposed in the inside space 500. Specifically, the gas adsorbent 60 has an elongated shape and is formed at an end (left end in FIG. 4) in the length direction of the second glass panel 30, along the width direction of the second glass panel 30. Thus, the gas adsorbent 60 is unlikely to be perceived. Moreover, the gas adsorbent 60 is located apart from the exhaust port 700. This can reduce the possibility of the gas adsorbent 60 inhibiting the evacuation of the inside space 500.

The gas adsorbent 60 is used to adsorb unnecessary gas (remaining gas or the like). The unnecessary gas is, for example, gas released from the frame member 410 when the frame member 410 is heated.

The gas adsorbent 60 includes a getter. The getter is a material having a property of adsorbing particles smaller than a prescribed size. The getter is, for example, an evaporable getter. The evaporable getter has a property of desorbing the adsorbed particles at or higher than a prescribed temperature (activation temperature). Thus, even when an adsorption capacity of the evaporable getter decreases, heating the evaporable getter to a temperature higher than or equal to the activation temperature enables the adsorption capacity of the evaporable getter to be recovered. The evaporable getter is, for example, zeolite or ion-exchanged zeolite (e.g., copper ion-exchanged zeolite).

The gas adsorbent 60 includes powder of the getter. Specifically, the gas adsorbent 60 is formed by application of a solution in which the powder of the getter is dispersed. In this case, the gas adsorbent 60 can be downsized. Thus, the gas adsorbent 60 can be disposed even when the inside space 500 is narrow.

The plurality of spacers 70 serves to maintain the prescribed space between the first glass panel 20 and the second glass panel 30.

The plurality of spacers 70 are disposed in the inside space 500. Specifically, the plurality of spacers 70 are arranged at intersections of a virtual rectangular lattice. For example, a space between the plurality of spacers 70 is 2 cm. Note that the size of the spacer 70, the number of spacers 70, the space between the spacers 70, and the arrangement pattern of the spacers 70 may accordingly be selected.

Each spacer 70 has a columnar shape having a height substantially equal to the prescribed space. For example, the spacer 70 has a diameter of 1 mm and a height of 100 µm. Note that each spacer 70 may have a desired shape such as a prism shape or a spherical shape.

The spacer 70 is made of a transparent material. Note that as long as each spacer 70 is sufficiently small, it may be made of a non-transparent material. The material of the spacer 70 is selected so that the spacer 70 does not deform in a first melting step, an evacuation step, and a second melting step (which will be described later). For example, the material of the spacer 70 is selected so that a softening point (softening temperature) is higher than the softening point of the thermal adhesive.

Such a preassembled component 100 is subjected to the prescribed processes to obtain the glass panel unit (finished product) 10.

In the prescribed processes, the inside space 500 is evacuated at a prescribed temperature (evacuation temperature) Te (see FIG. 7) so that the inside space 500 becomes the reduced pressure space 50. The evacuation temperature Te is higher than the activation temperature of the getter of the gas adsorbent 60. This enables the evacuation of the inside space 500 and the recovery of the adsorption capacity of the getter to be simultaneously achieved.

Moreover, in the prescribed processes, as illustrated in FIG. 2, the frame member 410 is deformed to close the exhaust port 700, thereby forming the seal 40 surrounding the reduced pressure space 50. Melting the thermal adhesive serving as the frame member 410 once at a prescribed temperature (second melting temperature) Tm2 higher than or equal to the softening point enables the frame member to form the seal 40. Note that the first melting temperature Tm1 is lower than the second melting temperature Tm2. Thus, when the first glass panel 20 and the second glass panel 30 are bonded by the frame member 410, the exhaust port 700 is prevented from being closed due to the deformation of the frame member 410.

As illustrated in FIG. 2, the thus obtained glass panel unit (finished product) 10 includes the first glass panel 20, the second glass panel 30, the seal 40, the reduced pressure space 50, the gas adsorbent 60, and the plurality of spacer 70.

The reduced pressure space 50 is formed by evacuating the inside space 500 via the exhaust port 700 as described above. In other words, the reduced pressure space 50 corresponds to the inside space 500 whose inner pressure is lower than or equal to a prescribed value. The prescribed value is, for example, 0.1 Pa, and when the internal pressure is lower than or equal to a pressure which can be regarded as being vacuum, the reduced pressure space 50 is a vacuum space.

The seal 40 completely surrounds the reduced pressure space 50 and hermetically bonds the first glass panel 20 to the second glass panel 30.

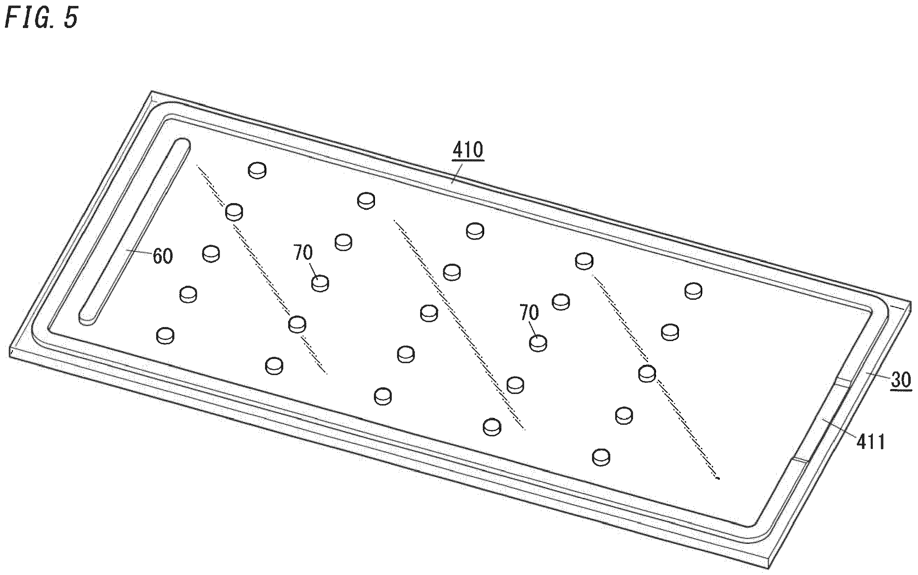

Next, the manufacturing method of the glass panel unit 10 of the first embodiment will be described with reference to FIGS. 5 to 8.

The manufacturing method of the glass panel unit 10 of the first embodiment includes a preparation step, an assembling process, a hermetically sealing process, and a removal process. Note that the preparation step may be omitted.

The preparation step is a step of forming the first glass panel 20, the second glass panel 30, the frame member 410, the inside space 500, the exhaust port 700, and the gas adsorbent 60 to obtain a preassembled component 100. The preparation step includes first to fifth steps. Note that the order of the second to fifth steps may accordingly be changed.

The first step is a step (substrate forming step) of forming the first glass panel 20 and the second glass panel 30. For example, in the first step, the first glass panel 20 and the second glass panel 30 are fabricated. Moreover, in the first step, the first glass panel 20 and the second glass panel 30 are washed as necessary.

The second step is a step (seal material forming step) of forming the frame member 410. In the second step, a material (thermal adhesive) of the frame member 410 is applied onto the second glass panel 30 (first surface 301) with a dispenser or the like.

Here, as illustrated in FIG. 5, a low step part 411 is formed in a part of the frame member 410. The low step part 411 has a thickness smaller than the thickness of the other parts of the frame member 410. The low step part 411 forms the exhaust port 700 of the preassembled component 100. when the material of the frame member 410 is discharged with a dispenser to the part where the low step part 411 is formed, the movement speed of a nozzle of the dispenser is increased, thereby forming the low step part 411 having a thickness smaller than the thickness of the other parts.

Note that when the movement speed of the nozzle of the dispenser is constant, and the material of the frame member 410 is disposed at the part where the low step part 411 is to be formed, a discharge rate per unit time of the material of the frame member 410 discharged from the nozzle of the dispenser may be reduced. Moreover, the exhaust port 700 does not have to be formed by the low step part 411 formed in the frame member 410, but the material (thermal adhesive) serves as the frame member 410 may be porous and may thus have a ventilation property until the material is melted at the second melting temperature Tm2. In this case, the ventilation property is lost by melting the material serves as the frame member 410 at the second melting temperature Tm2.

The material of the frame member 410 is dried and pre-calcined. For example, the second glass panel 30 applied with the material of the frame member 410 is heated.

The third step is a step (spacer forming step) of forming the spacers 70. In the third step, the plurality of spacers 70 are formed in advance, and the plurality of spacers 70 are arranged at prescribed locations on the second glass panel 30 with a chip mounter or the like. Note that the plurality of spacers 70 may be formed by a photolithography technique and an etching technique. In this case, the plurality of spacers 70 are made of a photocurable material or the like. Alternatively, the plurality of spacers 70 may be formed by a known thin film formation technique.

The fourth step is a step (gas adsorbent forming step) of forming a gas adsorbent 60. In the fourth step, a solution in which powder of a getter is dispersed is applied to a prescribed location of the second glass panel 30 and dried to form the gas adsorbent 60.

Completing the first to fourth steps thus provides the second glass panel 30 on which the frame member 410, the gas adsorbent 60, and the plurality of spacers 70 are formed as illustrated in FIG. 5.

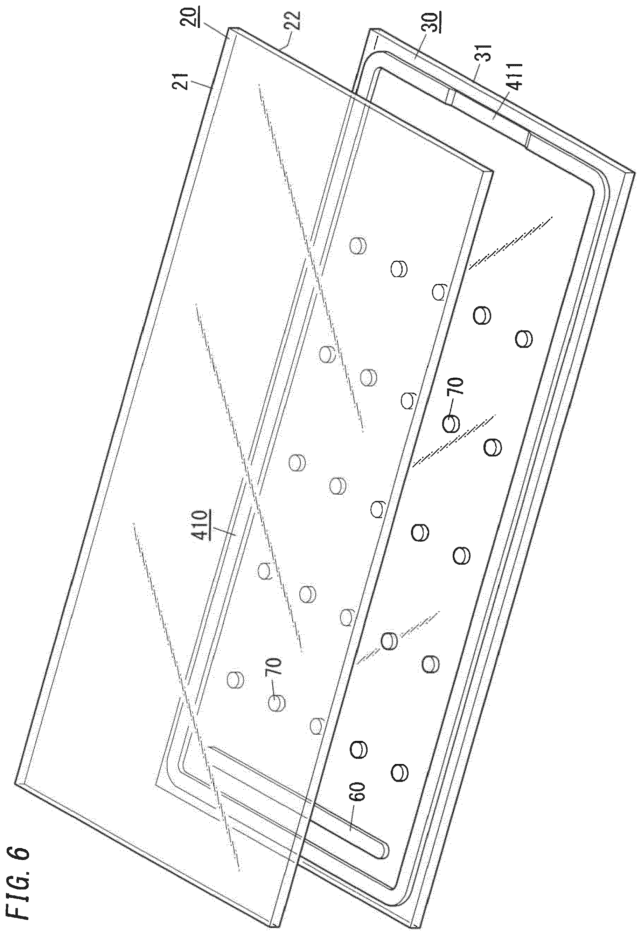

The fifth step is a step (disposition step) of disposing the first glass panel 20 and the second glass panel 30. As illustrated in FIG. 6, in the fifth step, the first glass panel 20 and the second glass panel 30 are superimposed such that the first surface 201 of the first glass panel 20 is parallel to and faces the first surface 301 of the second glass panel 30.

The assembling process is a step of preparing the preassembled component 100. Specifically, in the assembling process, the first glass panel 20 and the second glass panel 30 are bonded to each other to prepare the preassembled component 100. That is, the assembling process is a step (first melting step) of hermetically bonding the first glass panel 20 to the second glass panel 30 by the frame member 410.

In the first melting step, the thermal adhesive is once melted at the prescribed temperature (first melting temperature) Tm1 higher than or equal to the softening point of the thermal adhesive to hermetically bond the first glass panel 20 to the second glass panel 30. Specifically, the first glass panel 20 and the second glass panel 30 are placed in a chamber 81 (which will be described later) and are heated at the first melting temperature Tm1 for a predetermined time (first melting time) tm1 as illustrated in FIG. 7.

The first melting temperature Tm1 and the first melting time tm1 are determined such that the first glass panel 20 is hermetically bonded to the second glass panel 30 by the thermal adhesive serving as the frame member 410 but the exhaust port 700 is not closed due to the deformation of the frame member 410. That is, the lower limit of the first melting temperature Tm1 corresponds to the softening point of the thermal adhesive, but the upper limit of the first melting temperature Tm1 is determined such that the exhaust port 700 is not closed due to the deformation of the frame member 410.

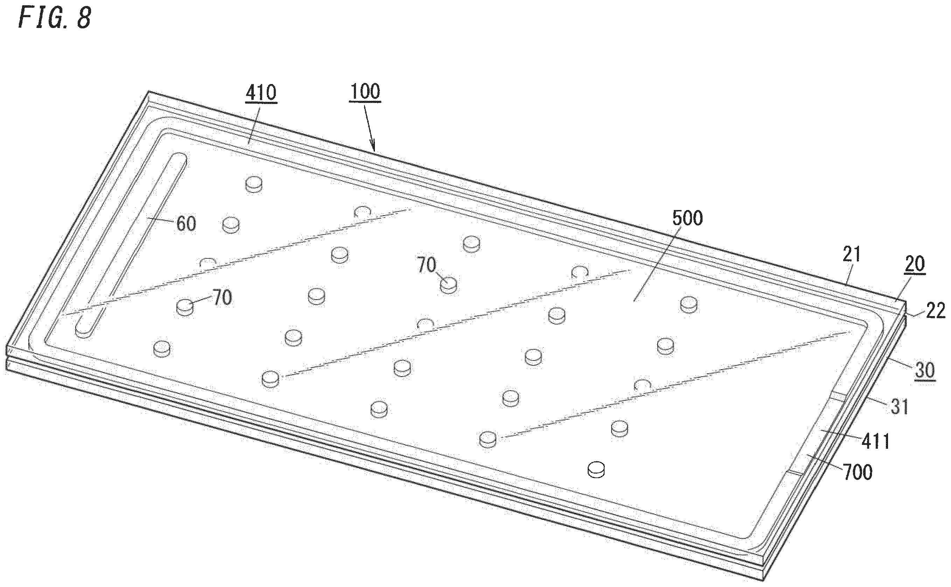

The above-described assembling process (first melting step) provides the preassembled component 100 shown in FIG. 8.

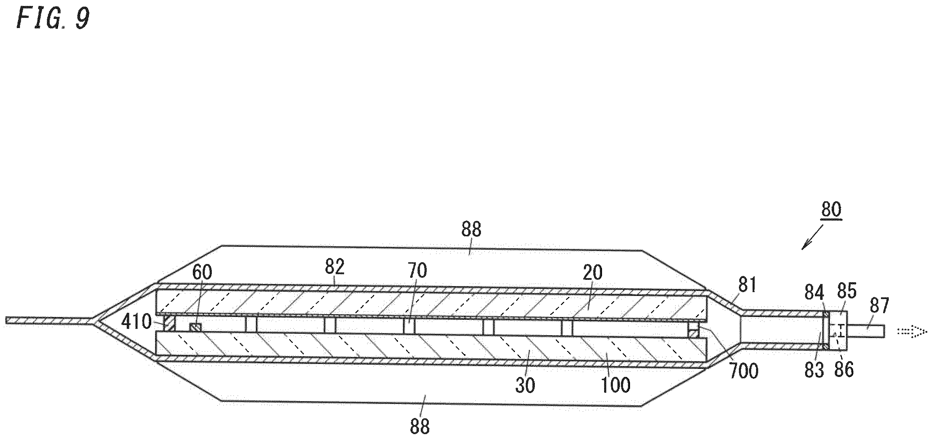

The hermetically sealing process is a process of subjecting the preassembled component 100 to the prescribed processes to obtain the glass panel unit (finished product) 10. The hermetically sealing process includes an evacuation step and a melting step (second melting step). That is, the evacuation step and the second melting step correspond to the prescribed processes. The hermetically sealing process adopts a chamber device 80 shown in FIG. 9.

The chamber device 80 includes the chamber 81 in which the preassembled component 100 is housed and hermetically sealed from the outside space.

The chamber 81 has a part serving as a pressing part 82 which is thermally conductive and which is movable to press the second surface 202 of the first glass panel 20 and the second surface 302 of the second glass panel 30 in a direction in which the second surface 202 and the second surface 302 approach each other.

In the first embodiment, the chamber 81 includes an easily deformable bag. The bag included in the chamber 81 is, for example, but is not limited to a bag made of metal. In the first embodiment, the chamber 81 includes a bag made of aluminum. The thickness of the bag included in the chamber 81 is, 10 µm, 50 µm, 100 µm, 500 µm, or the like, but the thickness is not particularly limited to these examples and is accordingly determined depending on a material. Moreover, a film which is heat-resistant to a temperature higher than the second melting temperature Tm2 and which suppresses formation of tears in the bag (e.g., bag made of aluminum) included in the chamber 81 may be stuck to the bag. Thus, the chamber 81 can be realized in a simple configuration as a bag.

The pressing part 82 includes a part of the bag as the chamber 81. That is, the pressing part 82 corresponds to a part of the chamber 81 which is actually pressed onto the second surface 202 of the first glass panel 20 or the second surface 302 of the second glass panel 30. The pressing part 82 has to be thermally conductive and is made preferably of a thermally conductive material having a thermal conductivity at least higher than the thermal conductivity of glass, more preferably of a material having a thermal conductivity substantially equal to the thermal conductivity of metal (e.g., aluminum).

The chamber 81 has an opening 83 through which the preassembled component 100 is placed in the chamber 81 and the glass panel unit 10 as a finished product is taken out from the chamber 81. At a periphery of the opening 83 of the chamber 81, a closing member 85 is placed via a seal member 84. In the first embodiment, the seal member 84 is formed of an O-ring which is heat-resistant to a temperature higher than the second melting temperature Tm2. Note that the seal member 84 may be cooled by water with a water-cooling mechanism. In the first embodiment, the closing member 85 includes a plate-like member made of metal.

The chamber 81 has an air passage 86 communicating with the outside space. In the first embodiment, the air passage 86 communicating with the inside space of the chamber 81 and the outside space is formed in the closing member 85. An exhaust pipe 87 is provided to an end of the air passage 86 of the closing member 85, the end facing the outside space.

The evacuation step is a step of evacuating the inside space 500 via the exhaust port 700 at a prescribed temperature (evacuation temperature) Te to realize the reduced pressure space 50.

The evacuation is performed with, for example, a vacuum pump. The vacuum pump has a seal head (not shown) which is attached to the exhaust pipe 87, and thereby an air inlet of the vacuum pump is connected to the exhaust port 700. When the evacuation is performed with the vacuum pump, air pressure in the chamber 81 decreases, and the pressing part 82 is pressed due to atmospheric pressure, and thereby the pressing part 82 presses the second surface 202 of the first glass panel 20 and the second surface 302 of the second glass panel 30 in a direction in which the second surface 202 and the second surface 302 approach each other.

The first melting step, the evacuation step, and the second melting step are performed with the first glass panel 20 and the second glass panel 30 (the second glass panel 30 provided with the frame member 410, the exhaust port 700, the gas adsorbent 60, the plurality of spacers 70) being in the chamber 81.

In the evacuation step, the inside space 500 is evacuated via the exhaust port 700 at the evacuation temperature Te for a predetermined time (evacuation time) te (see FIG. 7).

The evacuation temperature Te is set to be higher than the activation temperature (e.g., 350°C) of the getter of the gas adsorbent 60 and lower than the softening point (e.g., 434°C).

Thus, the frame member 410 does not deform. Moreover, the getter of the gas adsorbent 60 is activated, and particles (gas) adsorbed on the getter are desorbed from the getter. Then, the particles (i.e., gas) desorbed from the getter are exhausted through the inside space 500 and the exhaust port 700. Thus, in the evacuation step, the adsorption capacity of the gas adsorbent 60 is recovered.

The evacuation time te is set such that the reduced pressure space 50 having a desired degree of vacuum (e.g., degree of vacuum of lower than or equal to 0.1 Pa) is obtained.

The second melting step is a step of deforming the frame member 410 to form the seal 40 closing the exhaust port 700, thereby forming the seal 40 surrounding the reduced pressure space 50. In the second melting step, the thermal adhesive is once melted at the prescribed temperature (second melting temperature) Tm2 higher than or equal to the softening point to deform the frame member 410 so as to form the seal 40. Specifically, the first glass panel 20 and the second glass panel 30 are heated in chamber 81 at the second melting temperature Tm2 for a predetermined time (second melting time) tm2 (see FIG. 7).

As illustrated in FIG. 9, the first glass panel 20 and the second glass panel 30 are heated from the outer side of the pressing part 82 via the pressing part 82 with a heater 88. As the heater 88, for example, a hot plate including an electrically heated wire or the like is used, but the heater 88 is not particularly limited to the hot plate.

The second melting temperature Tm2 and the second melting time tm2 are set such that the thermal adhesive softens so that the frame member 410 closing the exhaust port 700 is formed. The lower limit of the second melting temperature Tm2 is the softening point (434°C). Note that unlike the first melting step, an object of the second melting step is to deform the frame member 410, and therefore, the second melting temperature Tm2 is set to be higher than the first melting temperature (440°C) Tm1.

The frame member 410 is heated also in the first melting step, and thus, gas may be released from the frame member 410. The gas released from the frame member 410 is adsorbed by the gas adsorbent 60, and therefore, the first melting step may degrade the adsorption capacity of the gas adsorbent 60. However, in the evacuation step, the inside space 500 is evacuated at the evacuation temperature Te higher than or equal to the activation temperature of the getter of the gas adsorbent 60. Thus, the adsorption capacity of the gas adsorbent 60 is recovered. Thus, in the second melting step, the gas adsorbent 60 can sufficiently adsorb the gas released from the frame member 410.

Moreover, in the second melting step, subsequent to the evacuation step, the inside space 500 is evacuated via the exhaust port 700. That is, in the second melting step, while the inside space 500 is evacuated via the exhaust port 700 at the second melting temperature Tm2, the frame member 410 is deformed to close the exhaust port 700 so as to form the seal 40. The second melting step is substantially included in the evacuation step. Thus, degradation of the degree of vacuum of the reduced pressure space 50 during the second melting step is further prevented.

The glass panel unit 10 is obtained through the above-described preparation step, assembling process, hermetically sealing process, and removal process.

In the first embodiment, the glass panel unit 10 is manufacturable without using the sealing evacuation furnace, which is a special large-scale device, used in conventional examples. That is, the chamber device 80 including the chamber 81 as described above is used. Thus, the pressing part 82 serving as a part of the chamber 81 presses the first glass panel 20 and the second glass panel 30, and thus, the interior volume of the chamber 81 is small. Moreover, since the pressing part 82 is thermally conductive, heating the pressing part 82 with the heater 88 outside the chamber 81 enables the frame member 410 of the preassembled component 100 to be heated. Thus, since the chamber 81 has a small volume, it is possible to simply manufacture the glass panel unit 10 without requiring the large-scale device. Moreover, the amount of gas (air) to be exhausted is small, the dynamic force is small, and the energy is saved.

Moreover, deformation, cutting off, or the like of the chamber device 80 is not involved, and therefore, the chamber device 80 is reusable.

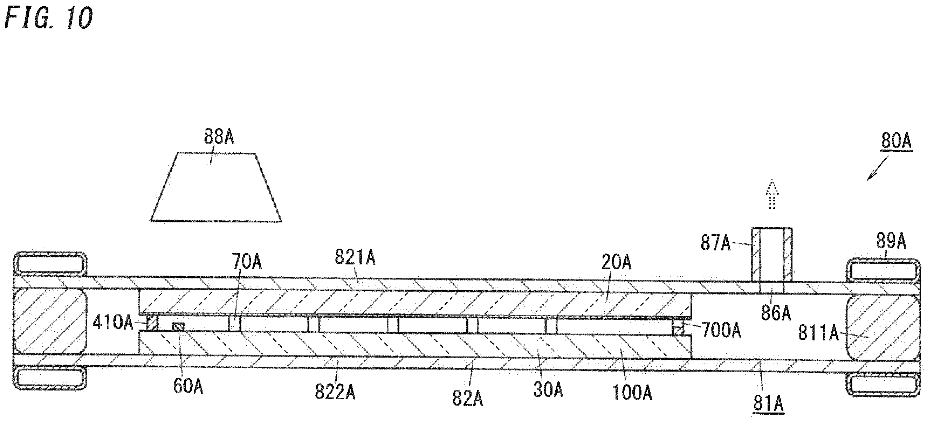

Next, an example not falling within the scope of the claims will be described based on FIG. 10. This example adopts a chamber device 80A different from the chamber device 80 of the first embodiment. Note that this example is mostly the same as the first embodiment, and components the same as the first embodiment are denoted by the same reference signs with "A" at the end, the description thereof is omitted, and components different from those in the first embodiment are mainly described.

The chamber device 80A includes a chamber 81A in which a preassembled component 100A is housed.

The chamber 81A has a part serving as a pressing part 82A which is thermally conductive and which is movable to press a first glass panel 20A and a second glass panel 30A in a direction in which the first glass panel 20A and the second glass panel 30A approach each other. Specifically, the chamber 81A includes two plates serving as the pressing part 82A and a seal member 811A.

The pressing part 82A includes a first plate 821A and a second plate 822A. The first plate 821A and the second plate 822A are made of light transmitting glass.

Between the first plate 821A and the second plate 822A, the seal member 811A formed of an O-ring is disposed along peripheral portions of the first plate 821A and the second plate 822A. The O-ring is elastic and heat-resistant to a temperature higher than a second melting temperature Tm2. The seal member 811A is cooled by water with a water-cooling mechanism 89A.

When evacuation is performed with a vacuum pump, air pressure in the chamber 81A decreases, and the first plate 821A and the second plate 822A are pressed due to atmospheric pressure. The first plate 821A and the second plate 822A respectively press the first glass panel 20A and the second glass panel 30A. That is, since the seal member 811A is elastic, the seal member 811A can press first plate 821A and second plate 822A in a direction in which the first plate 821A and the second plate 822A approaches each other.

A heater 88A of the second embodiment is an infrared heater, but, for example, a hot plate including an electrically heated wire or the like may be used, and the heater 88A is not particularly limited to this example.

Moreover, an air passage 86A penetrating through the first glass panel 20A is formed, and an exhaust pipe 87A is provided to an end of the air passage 86A of the first glass panel 20A, the end facing the outside space. Moreover, a gas adsorbent 60A and spacers 70A are respectively the same as the gas adsorbent 60 and the spacers 70 in the first embodiment.

In a state where the chamber 81A is evacuated with the vacuum pump and a reduced pressure is achieved in the chamber 81A, the heater 88A heats a frame member 410A to close an exhaust port 700A. Thus, a glass panel unit having a reduced pressure space therein is formed.

Moreover, the first plate 821A and the second plate 822A does not have to be made of glass but may be made of metal, and the material of the first and second plates is not particularly limited to this example. When the first plate 821A and the second plate 822A are not made of glass (i.e., are not light transmissive), a hot plate is preferably adopted as the heater 88A.

Similarly to the first embodiment, this example also enables a glass panel unit to be relatively simply manufactured without using the sealing evacuation furnace, which is a special large-scale device, conventionally used. In particular, a simple configuration including the first plate 821A, the second plate 822A, and the seal member 811A enables the chamber 81A to be configured.

Moreover, deformation, cutting off, or the like of the chamber device 80A is not involved, and therefore, the chamber device 80A is reusable.

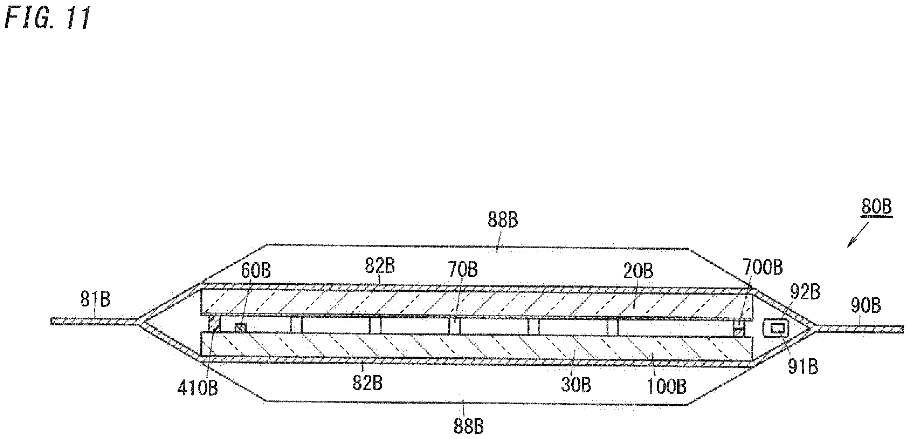

Next, another embodiment will be described based on FIG. 11. This embodiment adopts a chamber device 80B different from the chamber device 80 of the first embodiment. Note that this embodiment is mostly the same as the first embodiment, and components the same as the first embodiment are denoted by the same reference signs with "B" at the end, the description thereof is omitted, and components different from those in the first embodiment are mainly described.

The chamber device 80B includes a chamber 81B which houses a preassembled component 100B.

The chamber 81B includes a bag which is easily deformable. The bag included in the chamber 81B may be but is not limited to a bag made of, for example, metal. The chamber 81B of the third embodiment includes a bag made of aluminum similar to that of the first embodiment.

The chamber 81B has an opening. After the preassembled component 100B is housed in the chamber 81B and the pressure in the chamber 81B is reduced, the opening becomes a sealed part 90B sealed by welding or the like and hermetically closed.

Moreover, in the chamber 81B, a gas adsorbent 91B is inserted. The gas adsorbent 91B has a getter similar to that of a gas adsorbent 60B. The gas adsorbent 91B is sealed in a pack 92B. After the pressure in the chamber 81B is reduced, the pack 92B is broken, and the getter included in the gas adsorbent 91B is activated. The pack 92B can be broken by being pinched over the bag as the chamber 81B.

A heater 88B of the third embodiment is a hot plate including, for example, an electrically heated wire but is not particularly limited to this example. In a state where the sealed part 90B is formed and hermetical sealing achieves reduced pressure in the chamber 81B, the heater 88B heats a frame member 410B to close an exhaust port 700B. Here, gas generated from the frame member 410B is adsorbed onto the gas adsorbent 91B. Thus, a glass panel unit having a reduced pressure space therein is formed.

When the chamber 81B is evacuated with a vacuum pump and the pressure in the chamber 81B is reduced, a pressing part 82B is pressed due to atmospheric pressure, and the pressing part 82B presses a first glass panel 20B and a second glass panel 30B in a direction in which the first glass panel 20B and the second glass panel 30B approach each other. Spacers 70B are the same as the spacers 70 of the first embodiment.

Similarly to the first embodiment, this embodiment also enables a glass panel unit to be relatively simply manufactured without using the sealing evacuation furnace, which is a special large-scale device, conventionally used.

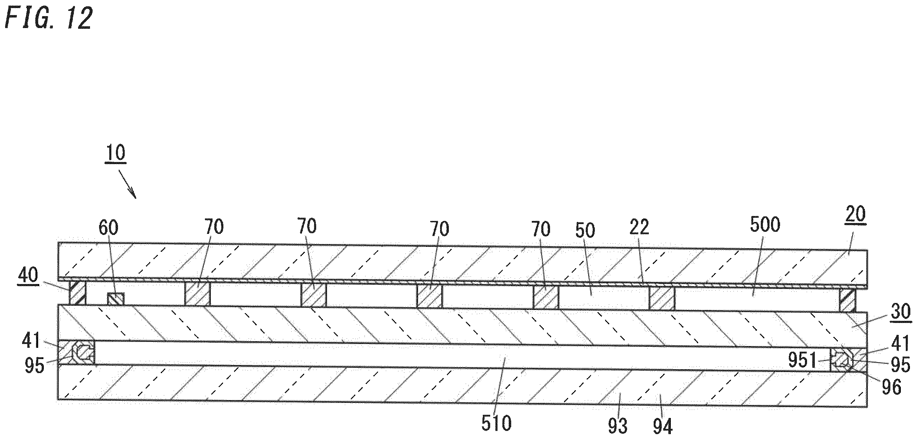

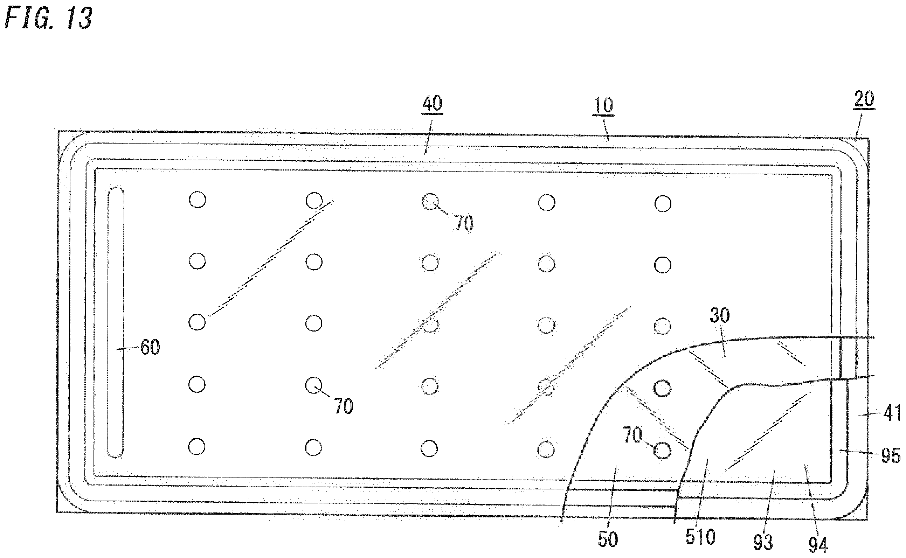

Next, a variation of the glass panel unit 10 manufactured by the manufacturing method of each of the above-described first to third embodiments will be described with reference to FIGS. 12 and 13. Note that the glass panel unit 10 according to the variation includes components in addition to the components of the above-described glass panel unit 10, and therefore, components similar to those in the above-described glass panel unit 10 are denoted by the same reference signs, and the description thereof is omitted.

A glass panel unit 10 in the variation includes a third panel 93 disposed to face a second panel 30. Note that in the variation, the third panel 93 faces, for the sake of convenience, the second panel 30 but may face a first panel 20.

The third panel 93 includes a third glass plate 94. The third glass plate 94 included in the third panel 93 has a flat surface and a predetermined thickness. In the variation, the third glass plate 94 serves as the third panel 93.

Note that the third panel 93 may include a coating on any surface thereof. The coating is a film which is an infrared reflective film having a desired physical property. In this case, the third panel 93 includes the third glass plate 94 and the coating. In sum, the third panel 93 includes at least the third glass plate 94.

Moreover, the glass panel unit 10 includes a second seal 41 disposed between the second panel 30 and the third panel 93 to hermetically bond the second panel 30 to the third panel 93. Note that in this case, a seal 40 serves as a first seal. The second seal 41 is annularly disposed between a peripheral portion of the second panel 30 and a peripheral portion of the third panel 93. The second seal 41 may be made of a similar material to the seal 40 or may be made of a material different from the seal 40.

The glass panel unit 10 includes a second inside space 510 hermetically enclosed by the second panel 30, the third panel 93, and the second seal 41 and filled with drying gas. Note that in this case, an inside space 500 serves as a first inside space. As the drying gas, dried noble gas such as argon, dry air, or the like is used but the drying gas is not limited to this example.

Moreover, on an inner side of the second seal 41 between the peripheral portion of the second panel 30 and the peripheral portion of the third panel 93, a hollow frame member 95 is annularly disposed. In the frame member 95, a through hole 951 communicating with the second inside space 510 is formed, and in the through hole 951, a desiccant 96 such as silica gel is housed.

Moreover, the second panel 30 and the third panel 93 can be bonded to each other in the same manner as the bonding of the first panel 20 and the second panel 30, and an example is described below.

First, the third panel 93 and an assembled component including the first panel 20 and the second panel 30 (the glass panel unit 10 in the first embodiment or the second embodiment) are prepared.

A second thermal adhesive serving as the second seal 41 is disposed in a frame shape on the peripheral portion of the surface of the third panel 93 or the second panel 30 (second thermal adhesive disposing step). The thermal adhesive may be made of a similar material to the thermal adhesive (first thermal adhesive) serving as a frame member 410 or may be made of a different material from the thermal adhesive serving as the frame member 410. In this step, an air passage (second air passage) including a through hole communicating with the second inside space 510 and the outside space is further formed in the thermal adhesive.

Next, the third panel 93 is disposed to face the second panel 30 (third panel opposite disposition step).

Then, the temperature of the thermal adhesive is increased to a temperature at which the thermal adhesive becomes the second seal 41 to once melt the thermal adhesive, thereby hermetically bonding the second panel 30 to the third panel 93 by the second seal 41 (bonding step). Note that in this step, the second air passage is not completely closed.

Thereafter, drying gas is fed via the second air passage into the second inside space 510 (drying gas feeding step). In this step, the second inside space 510 may be filled with only the drying gas, or air may remain in the second inside space 510.

Subsequently, the second seal 41 is heated to close the second air passage to seal the second inside space 510 (second space sealing step).

The glass panel unit 10 is thus formed. The glass panel unit 10 of the variation provides increased thermal resistance.

As can be clearly seen from the above-described embodiments, a manufacturing method of a glass panel unit 10 of a first aspect according to the present invention as defined by claim 1, includes housing a preassembled component 100 in a chamber 81 and evacuating the chamber 81 through an air passage 86 to achieve a reduced pressure state in the chamber 81. The preassembled component 100 includes: a first glass panel 20 including at least a glass plate 21; a second glass plate 30 including at least a glass plate 31 and being disposed with a first surface 301 of the second glass panel 30 facing a first surface 201 of the first glass panel 20 with a prescribed space formed between the first surface 301 of the second glass panel 30 and the first surface 201 of the first glass panel 20; a frame member 410; and an inside space 500. The frame member 410 is disposed between the first glass panel 20 and the second glass panel 30 to hermetically bond the first glass panel 20 to the second glass panel 30. The inside space 500 is enclosed by the first glass panel 20, the second glass panel 30, and the frame member 410. The frame member 410 has an exhaust port 700 communicating with the inside space 500 and an outside space. The chamber 81 has a part serving as a pressing part 82. The pressing part 82 is thermally conductive. The pressing part 82 is movable to press a second surface 202 of the first glass panel 20 and a second surface 302 of the second glass panel 30 in a direction in which the second surface 202 of the first glass panel 20 and the second surface 302 of the second glass panel 30 approach each other. The chamber 81 has the air passage 86 communicating with the outside space. The manufacturing method includes heating the frame member 410 of the preassembled component 100 stored in the chamber 81 with a heater 88 to deform the frame member 410 to close the exhaust port 700.

The first aspect enables the glass panel unit 10 to be simply manufactured.

In the manufacturing method of a glass panel unit 10 the chamber 81 includes a deformable bag having an opening 83, a seal member 84 may be provided at a periphery of the opening 83, and a closing member 85 which attachably and detachably may close the opening 83 via the seal member 84 is provided. The closing member 85 has an air passage 86.

This enables the chamber 81 to be configured as a simple component as a bag. Moreover, deformation or breakage of the chamber 81 is not involved, and therefore, the chamber 81 is reusable.

A manufacturing method of a glass panel unit of another aspect according to the present invention is additional and is realized in combination with the first aspect. In the manufacturing method of the glass panel unit of this aspect, a seal member 811A may be provided. The seal member 811A is disposed between the first plate 821A and the second plate 822A and is heat-resistant and elastic.

This aspect enables the chamber 81A to be simply configured with the first plate 821A, the second plate 822A, and the seal member 811A. Moreover, deformation or breakage of the chamber 81A is not involved, and thus the chamber 81A is reusable.

A manufacturing method of a glass panel unit of another aspect according to the present invention is additional and is realized in combination with the first aspect. In the manufacturing method of the glass panel unit of the this aspect, the deformable bag may have an opening. After the preassembled component 100B is housed in the chamber 81B through the opening and pressure in the chamber 81B is then reduced, the opening is sealed to form a sealed part 90B.

This aspect enables the chamber 81B to be configured as a simple component as a bag. Moreover, deformation or breakage of the chamber 81B is not involved, and therefore reuse of the chamber 81B is possible.

### Reference Signs List

- 10: Glass Panel Unit
- 100: Preassembled Component
- 100B: Preassembled Component
- 20: Glass Panel
- 201: First Surface
- 202: Second Surface
- 30: Glass Panel
- 301: First Surface
- 302: Second Surface
- 410: Frame Member
- 500: Inside Space
- 700: Exhaust Port
- 81: Chamber
- 81A: Chamber
- 81B: Chamber
- 811A: Seal Member
- 82: Pressing part
- 82A: Pressing part
- 821A: First Plate
- 822A: Second Plate
- 83: Opening
- 84: Seal Member
- 85: Closing Member
- 86: Air Passage
- 88: Heater
- 90B: Sealed Part

## Claims

1. A manufacturing method of a glass panel unit, comprising:housing a preassembled component (100) to be a glass panel unit, the preassembled component including a first glass panel (20), a second glass panel (30), a frame member (410), an inside space (500), and an exhaust port (700) in a chamber (81) having an air passage for evacuation and evacuating the chamber via the air passage (86) to achieve a reduced pressure state; and heating the frame member (410) of the preassembled component (100) housed in the chamber (81) by heating a pressing part (82) with a heater (88) outside the chamber (81) to deform the frame member (410) so as to close the exhaust port (700),the first glass panel (20) including at least a glass plate,the second glass panel (30) including at least a glass plate and being disposed with a first surface (301) of the second glass panel (30) facing a first surface (201) of the first glass panel (20) with a prescribed space formed between the first surface (301) of the second glass panel (30) and the first surface (201) of the first glass panel (20),the frame member (410) being disposed between the first glass panel (20) and the second glass panel (30) to hermetically bond the first glass panel (20) to the second glass panel (30),the inside space (500) being enclosed by the first glass panel (20), the second glass panel (30), and the frame member (410),the exhaust port (700) being formed in the frame member (410) and communicating with the inside space (500) and an outside space,the chamber (81) including a deformable bag and having a part serving as the pressing part (82) which is thermally conductive and which is movable to press a second surface (202) of the first glass panel (20) and a second surface (302) of the second glass panel (30) in a direction in which the second surface (202) of the first glass panel (20) and the second surface (302) of the second glass panel (30) approach each other,the pressing part (82) corresponding to a part of the chamber (81) which is actually pressed onto the second surface (202) of the first glass panel (20) or the second surface (302) of the second glass panel (30), wherein the pressing part (82) includes a part of the bag as the chamber (81),the air passage (86) communicating with the outside space.

2. The manufacturing method according to claim 1, wherein when the evacuation is performed with a vacuum pump to achieve the reduced pressure state, air pressure in the chamber decreases, and the pressing part is pressed due to atmospheric pressure, and thereby the pressing part presses the second surface of the first glass panel and the second surface of the second glass panel in a direction in which the second surface of the first glass panel and the second surface of the second glass panel approach each other.

3. The manufacturing method according to claim 1 or 2, wherein
the bag has an opening (83),
a seal member (84) is provided at a periphery of the opening,
a closing member (85) which attachably and detachably closes the opening via the seal member is provided, and
the closing member has an air passage.

4. The manufacturing method according to claim 1 or 2, wherein
the bag has an opening (83), and
after the preassembled component is housed in the chamber through the opening and pressure in the chamber is then reduced, the opening is sealed to form a sealed part (90B).

## Patentansprüche

1. Herstellungsverfahren einer Glasscheibeneinheit, umfassend:
Unterbringen einer vormontierten Komponente (100) als werdende Glasscheibeneinheit, wobei die vormontierte Komponente eine erste Glasscheibe (20), eine zweite Glasscheibe (30), ein Rahmenelement (410), einen Innenraum (500) und eine Auslassöffnung (700) einschließt, in eine Kammer (81) mit einem Luftkanal zur Evakuierung, und Evakuieren der Kammer über den Luftkanal (86), um einen Zustand reduzierten Drucks zu erreichen; und
Erwärmen des Rahmenelements (410) der vormontierten Komponente (100), untergebracht in der Kammer (81), durch Erwärmen eines pressenden Bestandteils (82) mit einem Heizgerät (88) außerhalb der Kammer (81), um das Rahmenelement (410) so zu verformen, sodass die Auslassöffnung (700) verschlossen wird, wobei die erste Glasscheibe (20) mindestens eine Glasplatte einschließt,
die zweite Glasscheibe (30) mindestens eine Glasplatte einschließt und so angeordnet ist, dass eine erste Oberfläche (301) der zweiten Glasscheibe (30) einer ersten Oberfläche (201) der ersten Glasscheibe (20) mit einem vorgeschriebenen Abstand, gebildet zwischen der ersten Oberfläche (301) der zweiten Glasscheibe (30) und der ersten Oberfläche (201) der ersten Glasscheibe (20), zugewandt ist,
das Rahmenelement (410) zwischen der ersten Glasscheibe (20) und der zweiten Glasscheibe (30) angeordnet ist, um die erste Glasscheibe (20) und die zweite Glasscheibe (30) hermetisch zu verbinden,
der Innenraum (500) durch die erste Glasscheibe (20), die zweite Glasscheibe (30) und das Rahmenelement (410) eingeschlossen ist,
die Auslassöffnung (700) in dem Rahmenelement (410) gebildet ist und mit dem Innenraum (500) und einem Außenraum verbunden ist,
die Kammer (81) einen verformbaren Beutel beinhaltet und einen Bestandteil, welcher als pressender Bestandteil (82) dient, aufweist, welcher thermisch leitfähig ist und welcher beweglich ist, um eine zweite Oberfläche (202) der ersten Glasscheibe (20) und eine zweite Oberfläche (302) der zweiten Glasscheibe (30) in eine Richtung zu drücken, in der die zweite Oberfläche (202) der ersten Glasscheibe (20) und die zweite Oberfläche (302) der zweiten Glasscheibe (30) sich gegenseitig annähern,
wobei der pressende Bestandteil (82) einem Bestandteil der Kammer (81) entspricht, welcher unmittelbar auf die zweite Oberfläche (202) der ersten Glasscheibe (20) oder die zweite Oberfläche (302) der zweiten Glasscheibe (30) gepresst wird, wobei der pressende Bestandteil (82) einen Bestandteil des Beutels als die Kammer (81) beinhaltet,
wobei der Luftkanal (86) mit dem Außenraum verbunden ist.

2. Herstellungsverfahren nach Anspruch 1, wobei, wenn die Evakuierung mit einer Vakuumpumpe durchgeführt wird, um den Zustand reduzierten Drucks zu erreichen, Luftdruck in der Kammer sinkt und der pressende Bestandteil durch den Atmosphärendruck gepresst wird, und dadurch der pressende Bestandteil die zweite Oberfläche der ersten Glasscheibe und die zweite Oberfläche der zweiten Glasscheibe in eine Richtung presst, in welcher die zweite Oberfläche der ersten Glasscheibe und die zweite Oberfläche der zweiten Glasscheibe sich gegenseitig annähern.

3. Herstellungsverfahren nach Anspruch 1 oder 2, wobei
der Beutel eine Öffnung (83) aufweist,
ein Dichtungselement (84) am Rand der Öffnung bereitgestellt ist,
ein Verschlusselement (85), welches die Öffnung anbringbar und abnehmbar über das Dichtungselement verschließt, bereitgestellt ist, und
das Verschlusselement einen Luftkanal aufweist.

4. Herstellungsverfahren nach Anspruch 1 oder 2, wobei
der Beutel eine Öffnung (83) aufweist und, nachdem die vormontierte Komponente durch die Öffnung in der Kammer untergebracht wurde und der Druck in der Kammer dann reduziert wurde,
die Öffnung verschlossen wird, um einen verschlossenen Bestandteil (90B) zu bilden.

## Revendications

1. Procédé de fabrication d'une unité de plaque de verre comprenant:
le logement d'un composant préassemblé (100) pour être une unité de plaque de verre, le composant préassemblé comprenant une première plaque de verre (20), une deuxième plaque de verre (30), un élément cadre (410), un espace intérieur (500) et un orifice d'échappement (700) dans une chambre (81) ayant un passage pour l'air pour évacuation et l'évacuation de la chambre via le passage pour l'air (86) pour la réalisation d'un état de pression réduite; et le chauffage de l'élément cadre (410) du composant préassemblé (100) logé dans la chambre (81) par chauffage d'une partie comprimante (82) avec un dispositif de chauffage (88) à l'extérieur de la chambre (81) pour déformer l'élément cadre (410) de manière à fermer l'orifice d'échappement (700), la première plaque de verre (20) comprenant au moins une plaque de verre, la deuxième plaque de verre (30) comprenant au moins une plaque de verre et étant disposée avec une première surface (301) de la deuxième plaque de verre (30) face à une première surface (201) de la première plaque de verre (20) avec un espace prévu formé entre la première surface (301) de la deuxième plaque de verre (30) et la première surface (201) de la première plaque de verre (20), l'élément cadre (410) étant disposé entre la première plaque de verre (20) et la deuxième plaque de verre (30) pour lier hermétiquement la première plaque de verre (20) à la deuxième plaque de verre (30), l'espace intérieur (500) étant enfermé par la première plaque de verre (20), la deuxième plaque de verre (30) et l'élément cadre (410), l'orifice d'échappement (700) étant formé dans l'élément cadre (410) et communiquant avec l'espace intérieur (500) et un espace extérieur, la chambre (81) comprenant un sac déformable et ayant une partie servant de partie comprimante (82), qui est thermiquement conductrice et qui peut être déplacée pour comprimer une deuxième surface (202) de la première plaque de verre (20) et une deuxième surface (302) de la deuxième plaque de verre (30) dans une direction dans laquelle la deuxième surface (202) de la première plaque de verre (20) et la deuxième surface (302) de la deuxième plaque de verre (30) se rapprochent l'une de l'autre, la partie comprimante (82) correspondant à une partie de la chambre (81) qui est en réalité comprimée sur la deuxième surface (202) de la première plaque de verre (20) ou la deuxième surface (302) de la deuxième plaque de verre (30), dans lequel la partie comprimante (82) comprend une partie du sac comme la chambre (81), le passage pour l'air (86) communiquant avec l'espace extérieur.

2. Procédé de fabrication selon la revendication 1, dans lequel quand l'évacuation s'effectue à l'aide d'une pompe à vide pour réaliser l'état de pression réduite, la pression d'air dans la chambre diminue, et la partie comprimante est comprimée à cause de la pression atmosphérique, et ainsi la partie comprimante comprime la deuxième surface de la première plaque de verre et la deuxième surface de la deuxième plaque de verre dans une direction dans laquelle la deuxième surface de la première plaque de verre et la deuxième surface de la deuxième plaque de verre se rapprochent l'une de l'autre.

3. Procédé de fabrication selon la revendication 1 ou 2, dans lequel
le sac présente une ouverture (83),
un élément d'étanchéité (84) est mise à disposition à la périphérie de l'ouverture,
un élément de fermeture (85) qui ferme de manière amovible l'ouverture via l'élément d'étanchéité est mis à disposition, et
l'élément de fermeture présente un passage pour l'air.

4. Procédé de fabrication selon la revendication 1 ou 2, dans lequel le sac présente une ouverture (83) et après que le composant préassemblé a été logé dans la chambre à travers l'ouverture et que la pression dans la chambre a alors été réduite, l'ouverture est étanchéifiée pour former une partie étanchéifiée (90B).
